# EUROPÄISCHE PATENTSCHRIFT

(11) **EP 2 021 541 B1**
(45) Veröffentlichungstag und Bekanntmachung des Hinweises auf die Patenterteilung: **31.07.2013**
(21) Anmeldenummer: 07728967.6
(22) Anmeldetag: 10.05.2007
(51) Int. Cl.: D21C 5/02, D21F 1/66, D21C 9/00, D21C 9/10, D21H 25/04

(54) **VERFAHREN ZUR VERBESSERUNG DER QUALITÄT EINER FASER-SUSPENSION**
METHOD FOR IMPROVING THE QUALITY OF A FIBROUS PULP
PROCÉDÉ POUR AMÉLIORER LA QUALITÉ D'UNE SUSPENSION DE FIBRES

(30) Priorität: 24.05.2006 DE 102006024404
(43) Veröffentlichungstag der Anmeldung: 11.02.2009
(73) Patentinhaber: Siemens Aktiengesellschaft, 80333 München (DE)
(72) Erfinder: HARTMANN, Werner, 91085 Weisendorf (DE); RÖMHELD, Michael, 91080 Uttenreuth (DE); SPETH, Friedrich, 91074 Herzogenaurach (DE); STRÄTZ, Klaus, 96191 Viereth-Trunstadt (DE)
(86) Internationale Anmeldenummer: PCT/EP2007/054515
(87) Internationale Veröffentlichungsnummer: WO 2007/134974

(56) Entgegenhaltungen:
- WO-A-03/096767
- WO-A-2004/101891
- WO-A-2006/134127
- DE-A1- 2 327 407
- DE-A1- 10 359 847
- FR-A- 2 711 680

## Beschreibung

Die Erfindung betrifft ein Verfahren zur Verbesserung der Qualität der in einem Stoffaufbereitungsprozess erzeugten Stoffsuspension für die spätere Herstellung von Flächengebilden aus Faserstoffen.

Im Sinne der Erfindung ist unter Stoffaufbereitung eine Behandlung und/oder Veränderung von Fasern sowie ein Mischen von Faserstoffen mit Wasser und/oder Zusätzen im gewünschten Verhältnis, entsprechend einer zu produzierenden Qualität, für die Flächengebilde aus Faserstoffen zu verstehen. Unter Flächengebilden aus Faserstoffen ist beispielsweise zu verstehen, ein Papier, ein Filz oder ein Textil. Faserstoffe sind Rohmaterialien beispielsweise zur Papierherstellung. Bei der Papierherstellung zählen hierzu nicht nur Holzstoff oder Holzschliff und/oder Zellstoff, sondern besonders auch Altpapier. Des Weiteren zählen zu den Faserstoffen auch Hadern und/oder Strohzellstoff sowie Fasern aus anderen Pflanzen oder synthetische bzw. mineralische Faserstoffe.

Ein wesentliches Kriterium der Qualität besteht im Bleichen der Ausgangs-, Zwischen- und Endprodukte.

Heutige Bleichverfahren beruhen auf einer chemischen Behandlung der Faserstoffe oder des fasrigen Materials. Es kommen typische Bleichchemikalien, wie z.B. Chlor, Chlordioxid, schweflige Säuren, Extraktion mit Natronlauge, Sauerstoff, Wasserstoffperoxyd und Ozon, zum Einsatz. In Abhängigkeit von der verwendeten Bleichmethode sind alkalische oder saure Umgebungsbedingungen gefordert. Moderne Bleichverfahren nutzen häufig verschiedene Bleichstufen, in denen verschiedene Bleichchemikalien zum Einsatz kommen. Jede Bleichstufe besteht typischerweise aus einer Mischeinheit und einem nachfolgenden Reaktionsturm. Bei diesen Bleichverfahren müssen die zum Teil hochgiftigen (Chlordioxid) oder stark ätzenden Reagenzien (Säuren, Laugen) in großer Menge transportiert, gelagert, und nach Ablauf des Verfahrens wieder aufgearbeitet bzw. entsorgt werden. Eine Effektivität des Bleichverfahrens hängt im Allgemeinen von einer optimalen Konzentration der Reagenzien in der Stoffsuspension ab. Beispielsweise ist die Effektivität des Bleichverfahrens bei einer Peroxydbleiche von der Konzentration des Perdydroxy (HOO⁻) abhängig.

Eine Reaktionsrate hängt unter anderem von einem PH-Wert und einer Temperatur der Stoffsuspension ab. Ein typischer Wert für die Temperatur ist z.B. 60°C bis 70°C und ein typischer Wert für einen PH-Wert liegt bei ca. 10,5. Der PH-Wert wird in der Regel über die Zugabe zusätzlicher Chemikalien wie Natriumhydroxid oder Natriumsilikat gesteuert. Einige Verfahren benutzen Druck und höhere Temperaturen um eine notwendige Verweilzeit in beispielsweise einem Reaktionsturm zu reduzieren. Ein wesentlicher Kostenfaktor bei einem Bleichverfahren hängt zu einem großen Teil von der Art und der Menge der eingesetzten Chemikalien sowie deren Weiterbehandlung, wie einer Abtrennung oder einer Entsorgung, ab.

Zur Entkeimung oder Sterilisierung oder auch zur Reinigung von Trinkwasser und Abwasser von kohlenwasserstoff-basierten Verunreinigungen sind aus "Sato et al., Ozon generation by a discharge in bubbled water, Digest of Technical Papers 12th IEEE International Pulsed Power Converence 1999" ein Verfahren und eine Vorrichtung bekannt.

Aus WO 2004/101891 A1 ist ein Verfahren zur Oberflächenbehandlung von Papier oder verbundenen Fasern mit Plasma bekannt.

Aus WO 03/096767 A1 ist ein Verfahren und eine Vorrichtung mit einer Anode und einer Kathode zur Erzeugung von Plasma in einer Flüssigkeit bekannt, wobei zunächst ein Strom von Blasen in der Nähe der Kathode erzeugt wird und sich durch Anlegen einer Potentialdifferenz zwischen Anode und Kathode ein Plasma von ionisierten Gasmolekülen innerhalb der Blasen bildet.

Der Erfindung liegt die Aufgabe zugrunde, ein Verfahren zur Verfügung zu stellen, um die Qualität der Stoffsuspension zu verbessern.

Die Aufgabe wird bezogen auf das eingangs genannte Verfahren dadurch gelöst, dass ein Verdünnungswasser mit einem kalten Plasma oder einer Gasentladung behandelt wird, bevor das Verdünnungswasser der Stoffsuspension zugegeben wird. Durch die Behandlung des Verdünnungswassers mit kaltem Plasma oder einer Gasentladung werden im Verdünnungswasser bzw. in der sich mit dem Verdünnungswasser gebildeten Stoffsuspension chemische Reaktionen ausgelöst, welche die Qualitätseigenschaften der später zu verwendenden Stoffsuspension deutlich verbessern. Dies ist beispielsweise in der Papierindustrie von besonderem Vorteil. Es wird z.B. die Reduzierung oder Deaktivierung von Verunreinigungen, etwa Klebstoffe, gefördert.

Dabei wird das Verdünnungswasser zum Bleichen der Faserstoffe verwendet. Ein frühzeitiges Bleichen der Faserstoffe - bereits in der Stoffaufbereitungsphase - erhöht mit Vorteil die Qualitätsmerkmale beispielsweise für ein später zu erzeugendes Papier.

Um vorzugsweise einer immer weiter steigenden Prozessgeschwindigkeit in beispielsweise Papierherstellungsanlagen gerecht zu werden, wird mit Vorteil das Verdünnungswasser in einem kontinuierlichen Strom am Ort der Plasmabeaufschlagung vorbeigeführt.

Mit weiterem Vorteil wird das Verdünnungswasser bevorzugt in einem Rohr oder Kanal oder Leitung am Ort der Plasmabeaufschlagung vorbeigeführt.

In einer weiterhin zweckmäßigen Ausführungsform wird das Verdünnungswasser in einem freien Strahl am Ort der Plasmabeaufschlagung vorbei oder hindurchgeführt. Das direkte Behandeln eines Wasserstrahls ohne Führungsmittel kann das Auslösen von chemischen Reaktionen im Verdünnungswasser begünstigen. Vorzugsweise ist eine Kombination aus abschnittsweise durch Führungsmittel geführtem Wasserstrahl und abschnittsweise freiliegendem Wasserstrahl, je nach Anlagenbeschaffenheit der Stoffaufbereitungsanlage, sinnvoll.

Auf vorteilhafte Weise werden zur Erzeugung des Plasmas bzw. der Gasentladung zwischen Elektroden Hochspannungsimpulse mit einer Impulsdauer von weniger als 10 µs erzeugt. Die Verwendung von derartig kurzen Hochspannungs-Einzelimpulsen hat sich als besonders vorteilhaft gezeigt, wogegen die Verwendung von Radiofrequenz-(RF) oder Mikrowellenimpulsen oder von Hochspannungs-Einzelimpulsen mit mehr als 10 µs Dauer, weit weniger effizient ist.

Eine weitere Steigerung der Qualitätsverbesserung wird dadurch erzielt, dass das Verdünnungswasser mit zumindest einer Elektrode zur Erzeugung des Plasmas bzw. der Gasentladung in Kontakt gebracht wird.

Mit weiterem Vorteil wird das Plasma oder die Gasentladung im Verdünnungswasser erzeugt. Durch die Erzeugung des Plasmas oder der Gasentladung, vorzugsweise direkt im Verdünnungswasser, werden z.B. die bleichenden chemischen Reaktionen weiter verstärkt. Diese im Verdünnungswasser erzeugten Radikale können in der sich mit dem Verdünnungswasser vermischenden Stoffsuspension, die bleichenden chemischen Reaktionen weiter verstärken. Dadurch kann vorzugsweise der Einsatz von Bleichchemikalien reduziert oder gänzlich vermieden werden. Das Plasma kann auch in derartiger Nähe zum Verdünnungswasser erzeugt werden, dass damit noch das Verdünnungswasser beaufschlagt oder beeinflusst wird.

Auf besonders vorteilhafte Art und Weise werden als Radikale Ozon, Wasserstoffperoxyd, Hydroxyl-Radikale, HO₂, O, OH⁻, HOO⁻und/oder HO₂⁻ erzeugt. Durch das Vermischen bzw. das Zugeben des derartig chemisch veränderten Verdünnungswassers zu der Stoffsuspension kann schon während des Stoffaufbereitungsprozesses eine bleichende Wirkung ohne die Zuhilfenahme von Chemikalien erzielt werden.

Zweckmäßig ist ferner, dass eine Erzeugungsrate der Radikale und/oder die Zusammensetzung der erzeugten Radikale durch Beeinflussung einer Amplitude, einer Impulsdauer und/oder einer Impulswiederholrate der Hochspannungsimpulse gesteuert wird. Somit ist die Plasmaerzeugung bzw. die Gasentladung kontrollierbar und es ergeben sich für die Erzeugung einer bestimmten Konzentration kurze Reaktionszeiten.

Auf vorteilhafte Weise wird also zur Steuerung und/oder Regelung der Erzeugungsrate und/oder der Art der erzeugten Radikale eine Konzentration der erzeugten Radikale gemessen. Da die Radikale im "sauberen" Verdünnungswasser erzeugt werden, ist es für die Messeinrichtung, aber auch für eine Vorrichtung zur Plasmaerzeugung, von ganz besonderem Vorteil, dass die fasrigen Materialien noch nicht mit dem Verdünnungswasser vermischt sind. Somit wird verhindert, dass die Messeinrichtung und auch die Vorrichtung zur Erzeugung des Plasmas durch die fasrigen Materialien beeinflusst oder gänzlich unwirksam gemacht werden. Des Weiteren kann so das Messergebnis der Konzentration der Radikale im Verdünnungswasser genauer bestimmt werden, weil die Radikale noch keine chemische Reaktion mit der Stoffsuspension eingegangen sind.

Im Hinblick auf eine eingesetzte Automatisierungslösung für das Verfahren ist es von besonderem Vorteil, dass die Konzentration "Online", insbesondere kontinuierlich und/oder in Echtzeit, gemessen wird.

Um die Erzeugungsrate der Radikale zu regeln oder zu steuern, wird vorzugsweise die Amplitude der Hochspannungsimpulse bei konstanter Wiederholrate verändert.

Des Weiteren wird vorzugsweise zur Beeinflussung der Erzeugungsrate zur Regelung und/oder Steuerung die Impulswiederholrate der Hochspannungsimpulse bei konstanter Amplitude verändert.

Hinsichtlich einer verbesserten Erzeugungsrate wird auf vorteilhafte Art und Weise das Verdünnungswasser mit einem Gas angereichert.

Eine nochmalige Steigerung der Erzeugungsrate für Radikale wird dadurch erreicht, dass das Verdünnungswasser im Bereich des erzeugten Plasmas oder der Gasentladung mit einem Gas angereichert wird. Eine gepulste Gasentladung oder Plasmaerzeugung in einer wässrigen Lösung hat durch Zugabe von feinstverteilten Gasblasen den Vorteil, dass in den Gasblasen Streamerentladungen entstehen.

Mit Vorteil wird eine Impulswiederholrate zwischen 10 Hz und 5 kHz, insbesondere aus dem Bereich von 10 Hz bis 10 kHz verwendet.

Je nach Umgebungsbedingungen oder Beschaffenheit des Verdünnungswassers kann es von Vorteil sein, Hochspannungsimpulse mit einer Dauer von weniger als 3 µs, vorzugsweise von weniger als 1 µs, vorzugsweise von weniger als 500 ns, anzuwenden.

Mehrere Ausführungsbeispiele sowie weitere Vorteile der Erfindung ergeben sich aus der nachfolgend beschriebenen Zeichnung, in deren
- FIG 1: eine schematische Darstellung einer Stoffaufbereitungsanlage mit erfindungsgemäßen Plasmareaktoren für ein Verdünnungswasser,
- FIG 2: ein Plasmareaktor für das Verdünnungswasser,
- FIG 3: eine Darstellung (Schnitt) einer Anordnung zur Erzeugung von Radikalen in Koronaplasmen in einer wässrigen Lösung oder in Luft: Parallelplatten- oder Rohranordnung mit Draht, dem eine gepulste Hochspannung überlagert wird,
- FIG 4: eine Prinzipdarstellung von Impulsen zur Erzeugung von Radikalen in Koronaentladungen in Luft oder wässrigen Medien bei Einsatz kurzer (typisch kleiner 1 µs) Hochspannungsimpulse mit hoher Impulswiederholrate,
- FIG 5 bis FIG 10: Elektrodenanordnungen und Elektrodensysteme zur Erzeugung von Koronaentladungen: Platte-Platte-, Platte-Draht-Platte-, Koaxiale Draht-Rohr-, Spitze-Platte-, Mehrfachspitzen-Platte-, Gitter-Platte (Rohr-, Gitter-Gitter-Anordnungen,
- FIG 11: eine hybride Entladung, wobei sich eine Elektrode vollständig oberhalb der wässrigen Lösung befindet, wogegen die zweite Elektrode in die wässrige Lösung eingetaucht ist,
- FIG 12: eine Platten- oder Gitteranordnung mit gekrümmten Oberflächen zur Anpassung an Gefäßwände bzw. Nutzung derselben als Elektrode, konzentrische Elektroden in Rohrform zur Nutzung der vorhandenen Verrohrung oder Türme für die Pulpe als Reaktorgefäß,
- FIG 13: eine gepulste Entladung im oberflächennahen Raum der wässrigen Lösung,
- FIG 14: ein gepulstes Koronaentladungssystem mit koaxialem Draht-Rohr, mit eingeperlten, feinstverteilten Gasblasen, so dass im Entladungsbereich feinste Gasperlen vorhanden sind und eine Streamerbildung vorwiegend in den Gasblasen abläuft,
veranschaulicht ist.

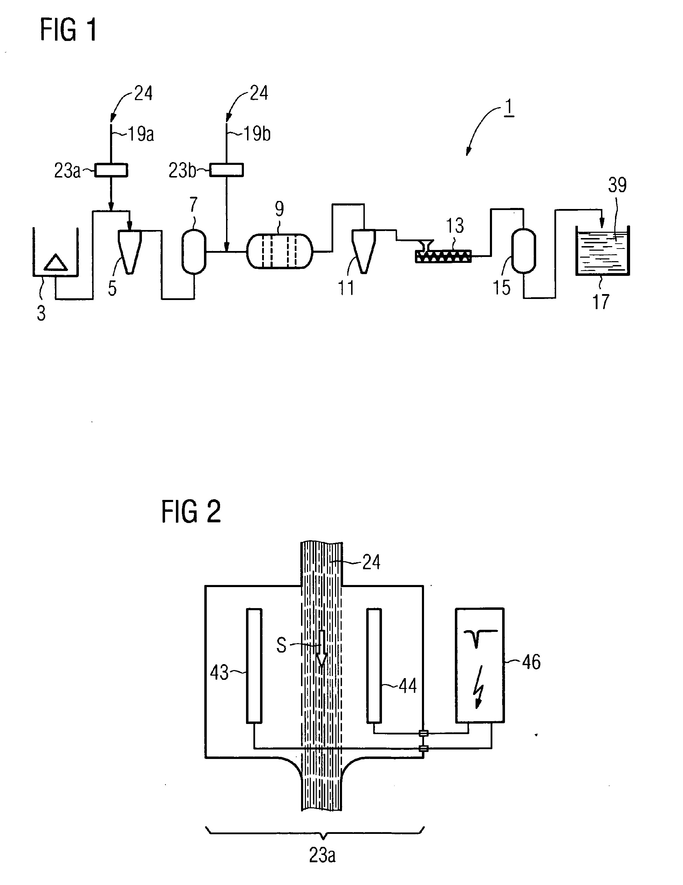

Einander entsprechende Teile sind in den Figuren 1 bis 14 mit denselben Bezugszeichen versehen.

FIG 1 zeigt eine schematische Darstellung einer Stoffaufbereitungsanlage 1. Mit einer Auflösungsvorrichtung 3 werden zu Beginn des Stoffaufbereitungsprozesses fasrige Materialien in einem wässrigen Bindemittel suspendiert. Die Auflösungsvorrichtung 3 ist über ein Rohrsystem mit einer Chemikalienzugabevorrichtung 5 verbunden. Weiterhin ist das Rohrsystem zwischen der Auflösungsvorrichtung 3 und der Chemikalienzugabevorrichtung 5 mit einem ersten Verdünnungswasserzulauf 19a verbunden. Die Chemiezugabevorrichtung 5 ist über ein Rohrsystem mit einer ersten Reinigungsstufe 7 verbunden. Die erste Reinigungsstufe 7 ist weiterhin über ein Rohrsystem mit einer Flotationsstufe 9 verbunden. Zwischen der ersten Reinigungsstufe 7 und der Flotationsstufe 9 ist ein zweiter Verdünnungswasserzulauf 19b angeordnet. Eine zweite Reinigungsstufe 11 schließt sich, verbunden über ein Rohrleitungssystem der, Flotationsstufe 9 an. Von der zweiten Reinigungsstufe 11 gelangt die Suspension oder Pulpe ebenfalls über ein Rohrleitungssystem in eine Eindickungsvorrichtung 13. Die Eindickungsvorrichtung 13 steht über ein Rohrleitungssystem mit einem Bleichbehälter 15 in Verbindung. Aus dem Bleichbehälter 15 wird die Suspension oder Pulpe 39 in eine Bütte 17 gepumpt. Von der Bütte 17 stehen die behandelten fasrigen Materialien oder die Pulpe 39 für einen weiteren Bearbeitungsprozess zur Verfügung.

Die Chemikalienzugabevorrichtung 5 kann verschiedene chemische Hilfsstoffe zugeben, u.a. Bleichstoffe zur Ergänzung eines plasmaerzeugten Bleicheffektes.

Während die Suspension oder Pulpe 39 durch den Stoffaufbereitungsprozess gepumpt wird, wird an den Stellen 19a und 19b Verdünnungswasser 24 beigemengt. Bei der Stoffauflösung der fasrigen Materialien in der Auflösungsvorrichtung 3 wird vorzugsweise mit einer Stoffdichte von bis zu 17 % gearbeitet.

Danach wird die Suspension aus fasrigen Materialien für die nachfolgende Chemikalienzugabevorrichtung 5 und die erste Reinigungsstufe 7 mit dem Verdünnungswasser 24 an dem Verdünnungswasserzulauf 19a auf ca. 5,8 bis 6 % verdünnt.

Das Verdünnungswasser 24 wird erfindungsgemäß am ersten Verdünnungswasserzulauf 19a mittels eines ersten Plasmareaktors 23a mit einem kalten Plasma bzw. einer Gasentladung behandelt. Durch die Behandlung des Verdünnungswassers 24 vor einer eigentlichen Verdünnungsstelle, an der sich das Verdünnungswasser 24 mit der im Rohrleitungssystem befindlichen Suspension vermischt, werden im Verdünnungswasser bestimmte Radikale erzeugt (OH⁻, HOO⁻, O, O₃). Diese Radikale, welche durch das Verdünnungswasser 24 in die Stoffsuspension gelangen, lösen bereits zu Beginn des Stoffaufbereitungsprozesses bleichende chemische Reaktionen in der Stoffsuspension aus. Auch können sie klebrige Verunreinigungen der Faserstoffe maskieren oder eliminieren. Diese bleichenden chemischen Reaktionen bzw. Radikale wirken direkt auf die fasrigen Materialien und sorgen so für das gewünschte Bleichergebnis. Für die nachfolgende Flotationsstufe 9 wird zwischen der ersten Reinigungsstufe 7 und der Flotationsstufe 9 die Stoffsuspension durch einen zweiten Verdünnungswasserzulauf 19b auf ca. 1 bis 1,3 % verdünnt. Auch an der Stelle 19b wird erfindungsgemäß über einen zweiten Plasmareaktor 23b das Verdünnungswasser 24 vor der Vermischung mit der Suspension mit einem kalten Plasma bzw. einer Gasentladung behandelt.

Die Plasmareaktoren 23a und 23b sind bevorzugt unmittelbar in der Nähe der jeweiligen Einspeisungsstellen des Verdünnungswassers 24 angeordnet, insbesondere in einem Abstand, dass die verbleibende Rohrleitungslänge zur Einspeisungsstelle vorzugsweise wenige Meter, vorzugsweise um 50 cm, insbesondere nur einige cm, beträgt.

Nach Passieren der zweiten Reinigungsstufe 11 wird die Stoffsuspension 39 mit einer Stoffdichte von ca. 1% in einer Eindickungsvorrichtung 13 eingedickt. Eine weitere Behandlung mit einem Knetdisperger, zur Verkleinerung von beispielsweise Restfarbpartikeln, kann an dieser Stelle optional eingesetzt werden.

FIG 2 zeigt in einem ersten Ausgestaltungsbeispiel einen der beiden aus FIG 1 bekannten Plasmareaktoren 23a und 23b in einer Schnittdarstellung. Der Plasmareaktor 23a ist derart hergerichtet, dass ein ungehinderter Durchfluss des Verdünnungswassers 24 ermöglicht ist. Das Verdünnungswasser 24 fällt oder fließt - vorzugsweise als freier Wasserstrahl in Strömungsrichtung S - durch einen Zwischenraum, welcher durch zwei in einem Abstand angeordnete Elektroden 43 und 44 gegeben ist. Die erste Elektrode 43 steht über eine Hochspannungsleitung mit einem Hochspannungsimpulsgenerator 46 in Verbindung. Zur Erzeugung eines Plasmas, einer Koronaentladung oder einer Gasentladung zwischen den beiden Elektroden 43 und 44 steht auch die zweite Elektrode 44 über eine Hochspannungsleitung mit dem Hochspannungsimpulsgenerator 46 in Verbindung. Mit dieser Anordnung ist eine simultane Erzeugung einer Reihe von unterschiedlich oxidierenden Radikalen im Verdünnungswasser 24 möglich. So können nach einer späteren innigen Vermischung mit der höher konsistenten wässrigen Suspension von fasrigen Materialien diese Fasern mit Radikalen behandelt werden.

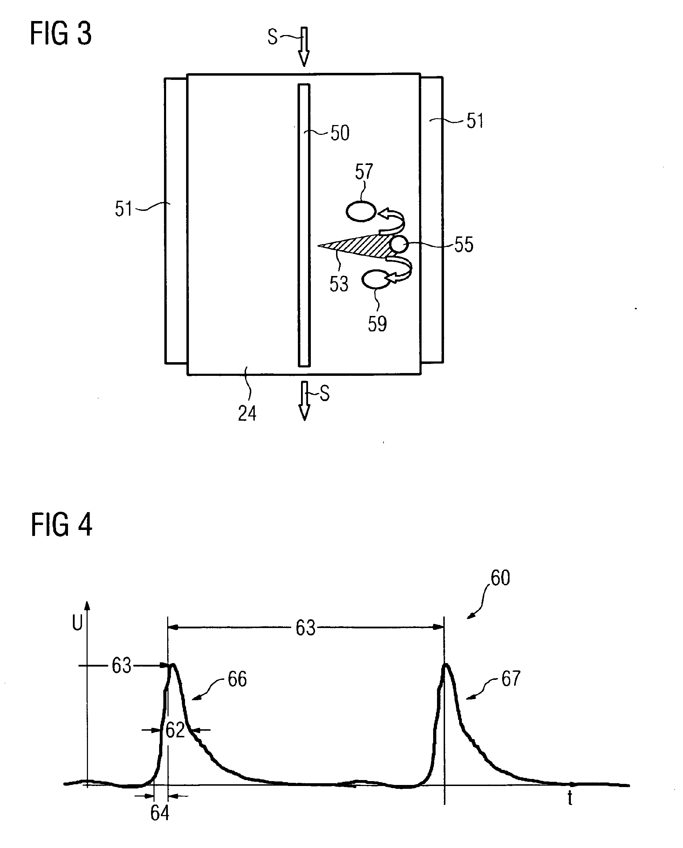

FIG 3 zeigt in einer Schnittdarstellung ein weiteres Ausgestaltungsbeispiel zur Durchleitung des Verdünnungswassers 24 und zur gleichzeitigen Plasmaerzeugung durch bzw. in einem Behandlungsvolumen. In der Mitte des Behandlungsvolumens ist eine Hochspannungselektrode 50 angeordnet. Der Außenmantel des Behandlungsvolumens ist als eine Gegenelektrode 51 hergerichtet, z.B. eine metallische Rohrwandung. In dem Behandlungsvolumen befindet sich das zu behandelnde Verdünnungswasser 24, welches bedarfsweise in Strömungsrichtung S fließen kann. Zwischen den Elektroden 50 und 51 ist ein Streamer 53 dargestellt. Radikale 59 werden in Streamern dadurch erzeugt, dass energiereiche Elektronen mit Molekülen zusammenstoßen und diese dadurch dissoziieren oder anregen. Bei der Dissoziation werden unmittelbar die Radikale 59 freigesetzt, während bei der Anregung durch einen anschließenden strahlenden Übergang UV-Licht erzeugt wird. Dieses erzeugte UV-Licht reagiert wiederum mit Wassermolekülen und dissoziiert diese.

In FIG 4 ist der verwendete Spannungsverlauf der Hochspannungsimpulse dargestellt. Ein erster Impuls 66 und ein zweiter Impuls 67, mit je einer Impulsdauer 62, weisen einen Abstand von einer Impulswiederholrate 63 auf. Auf der Abszisse ist die Zeit in ms und auf der Ordinate die Spannung in kV angegeben. Die Einheiten sind willkürlich gewählt. Ein Niveau einer Gleichspannung kann mit der dargestellten Abszisse zusammen fallen. Die dargestellte Impulsspannung U kann also vorzugsweise einer Gleichspannung überlagert werden, die ist stark von der Leitfähigkeit des Verdünnungswassers abhängig. Die Impulse 66 und 67 weisen eine Impulsdauer 62 von kleiner 1 µs auf, wobei die einzelnen Impulse 66, 67 eine stark ansteigende Flanke mit einer Anstiegszeit 64, welche deutlich geringer ist als die Impulsdauer 62. Die zu dem Impuls 66 oder 67 gehörende abfallende Flanke ist weniger stark ausgeprägt. Die Impulswiederholzeit 63 liegt typischer Weise zwischen 10 µs und 100 ms.

Dabei haben die einzelnen Impulse 66,67 eine solche Gesamtamplitude, dass über eine vorgegebene Gleichspannung hinaus eine vorgegebene Energiedichte erreicht wird. Wie erwähnt, ist dabei meist die Impulsanstiegszeit 64 kurz im Vergleich zur Impulsabfallzeit. Durch eine solche Art der Impulse wird erreicht, dass elektrische Durchschläge, die zu räumlichen und zeitlichen Störungen in der homogenen Plasmadichteverteilung führen würden, vermieden werden.

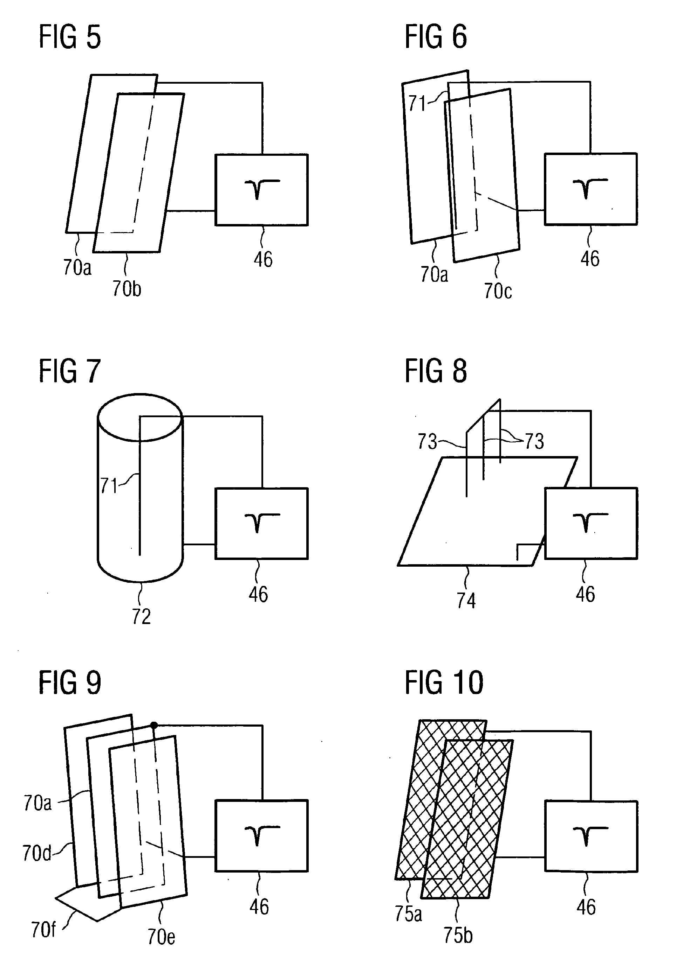

FIG 5 bis FIG 10 zeigen weitere Beispiele für Elektrodensysteme zur Erzeugung von Plasma und/oder Korona-Entladungen in vorzugsweise wässrigen Medien, insbesondere zur alternativen Verwendung bei den vorgenannten Ausführungsbeispielen. In FIG 5 ist eine Platte-Platte-Anordnung von einer ersten Platte 70a als Elektrode und einer zweiten Platte 70b als Elektrode dargestellt. Die erste Platte 70a und die zweite Platte 70b sind parallel zu einander angeordnet. Die erste Platte 70a bildet die Hochspannungselektrode und ist über ein Hochspannungskabel mit dem Hochspannungsimpulsgenerator 46 verbunden. Die zweite Platte 70b bildet die Gegenelektrode und steht als geerdete Elektrode mit dem Hochspannungsimpulsgenerator 46 in Verbindung.

Eine entsprechende Anordnung mit speziell ebenen Plattenelektroden ist in FIG 6 dargestellt. Es sind wiederum zwei massive Plattenelektroden 70a und 70c im festen Abstand vorhanden, wobei mittig eine Hochspannungselektrode 71 verläuft. Bei dieser Platte-Draht-Platte-Anordnung ist die Hochspannungselektrode 71 als massiver Draht ausgeführt und mit dem Hochspannungsausgang des Hochspannungsimpulsgenerators 46 verbunden. Die geerdeten Platten 70a, 70c stehen ebenfalls mit dem Hochspannungsimpulsgenerator 46 in Verbindung.

FIG 7 zeigt eine Draht-Rohr-Anordnung als Elektrodensystem. In eine zylinderförmige Elektrode 72 ragt mittig eine Hochspannungselektrode 71 hinein. Wie in FIG 6 ist die Hochspannungselektrode 71 als massiver Draht ausgeführt und mit dem Hochspannungsimpulsgenerator 46 verbunden. Die zylinderförmige Elektrode 72, welche vorzugsweise als ein Drahtgeflecht ausgestaltet ist, ist geerdet und steht mit dem Hochspannungsimpulsgenerator 46 in Verbindung.

FIG 8 zeigt eine Spitze-Platte-Anordnung als Elektrodensystem. Die beispielsweise drei Spitzen 73 sind über eine Hochspannungsleitung mit dem Hochspannungsimpulsgenerator 46 verbunden. Die Spitzen 73 sind rechtwinklig zu einer geerdeten Plattenelektrode 74 angeordnet. Der Abstand der Spitzenelektroden 73 zu der Plattenelektrode 74 ist einstellbar und kann somit für unterschiedliche Prozessbedingungen angepasst werden.

FIG 9 zeigt eine Elektrodensystemanordnung, welche 3 Platten 70a, 70d und 70e umfasst. Die erste Platte 70a, welche als Hochspannungselektrode mit dem Hochspannungsimpulsgenerator 46 verbunden ist, ist mittig zwischen zwei massiven Platten 70d und 70e angeordnet. Die Platten 70a und 70b sind über einen Plattenverbinder 70f verbunden. Da die Platte 70d als geerdete Gegenelektrode mit dem Hochspannungsimpulsgenerator 46 in Verbindung steht, hat die Platte 70e über dem Plattenverbinder 70f ebenfalls die Funktion einer geerdeten Gegenelektrode.

FIG 10 zeigt ein Elektrodensystem als Gitter-Gitter-Anordnung. Analog zur FIG 5 stehen sich hier ein erstes Gitter 75a und ein zweites Gitter 75b parallel gegenüber. Das erste Gitter 75a bildet hierbei die Hochspannungselektrode und ist mit dem Hochspannungsimpulsgenerator 46 verbunden. Das zweite Gitter 75b bildet die geerdete Gegenelektrode und steht mit dem Hochspannungsimpulsgenerator 46 in Verbindung.

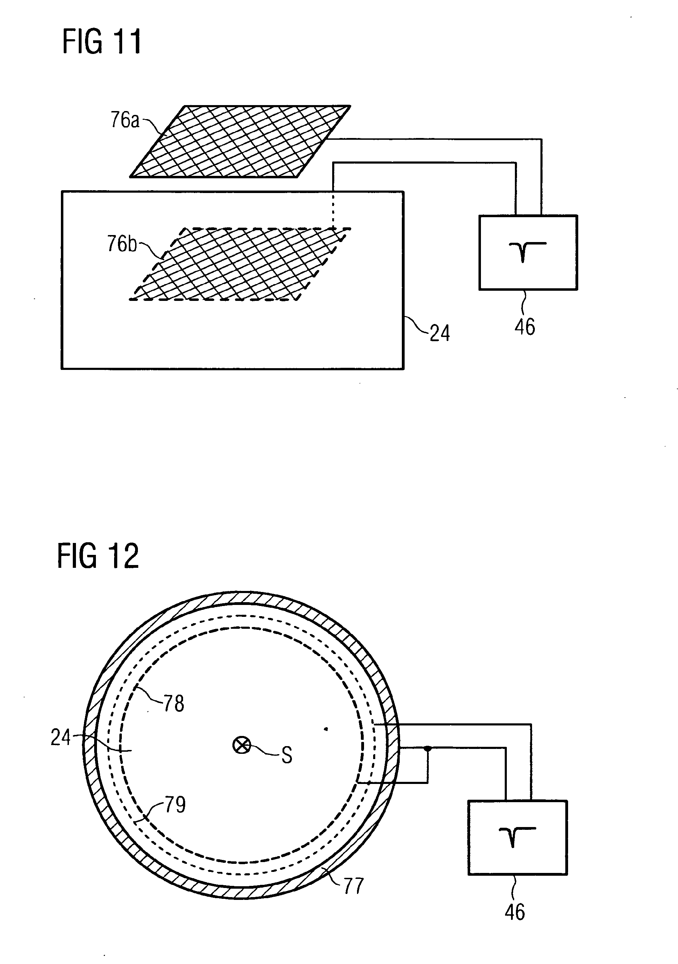

Eine hybride Entladung, wobei sich eine Elektrode 75a vollständig außerhalb zu behandelnden Verdünnungswassers 24 befindet und eine zweite Elektrode 76b ganz oder teilweise in das Verdünnungswasser 24 eingetaucht ist, wird mit der Anordnung in FIG 11 erzeugt. Die Elektrode 76a ist bei diesem weiteren Ausführungsbeispiel als eine Gitterelektrode ausgeführt und steht mit dem Hochspannungsimpulsgenerator 46 in Verbindung. Auch die geerdete Gegenelektrode 76b ist als eine Gitterelektrode ausgeführt.

In FIG 12 ist als weiteres Ausführungsbeispiel zu dem Plasmareaktor 23a und/oder 23b aus FIG 2 ein Rohr, vorzugsweise ein Rohr zum Transport des Verdünnungswassers 24 in Strömungsrichtung S senkrecht zur Zeichenebene, mit einer metallischen Außenwand 77 in einem Schnitt dargestellt. Es wird eine Platten- oder Gitteranordnung mit gekrümmten Oberflächen zur Anpassung an die Außenwand bzw. einer Gefäßwand als eine Elektrode verwendet. Eine Vielfachdrahtelektrode 79 ist als eine konzentrische Elektrode, dem Verlauf der Außenwand 77 folgend angeordnet und steht mit dem Hochspannungsimpulsgenerator 46 in Verbindung. Ihr stehen zwei Gegenelektroden gegenüber: Zum einen die Gefäßwand 77 und zum anderen eine Plattenelektrode 78. Die Hochspannungselektrode 79 ist zwischen der Gefäßwand 77 und der Plattenelektrode 78 berührungsfrei angeordnet. Die Gefäßwand 77 und die Plattenelektrode 78 sind elektrisch leitend miteinander verbunden und bilden somit die geerdeten Gegenelektroden, welche mit dem Hochspannungsimpulsgenerator 46 in Verbindung stehen.

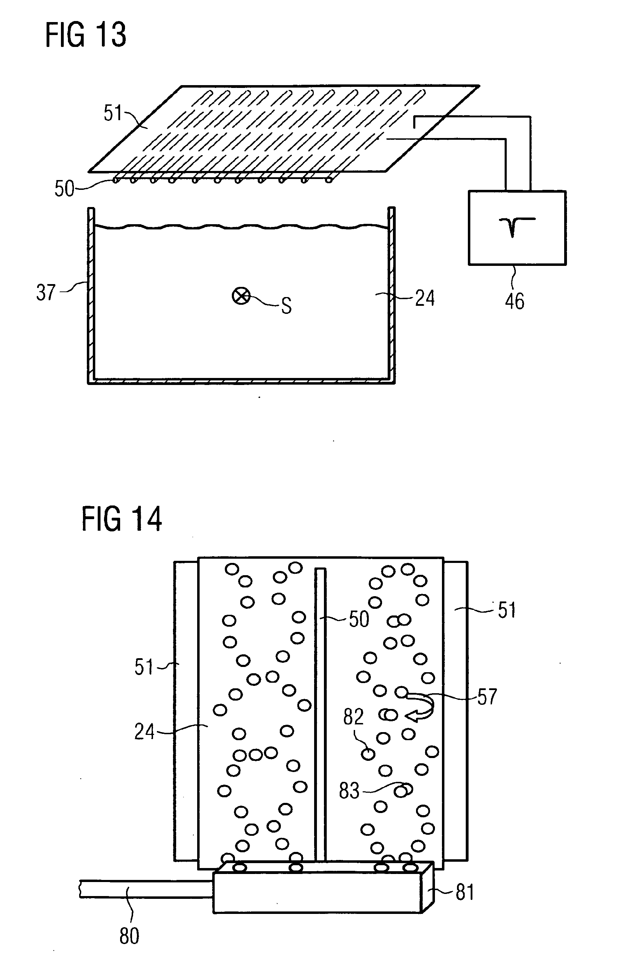

Um gepulste Entladungen im oberflächennahen Gasraum über dem Verdünnungswasser 24 zu erzeugen ist in FIG 13 als weiteres Ausführungsbeispiel eine spezielle Elektrodenanordnung dargestellt. Das Verdünnungswasser 24 wird in diesem Fall in einem nach oben offenen Verdünnungswasserkanal 37 mit Strömungsrichtung S senkrecht zur Zeichenebene geführt. Eine Hochspannungselektrode 50 umfasst mehrere elektrisch miteinander verbundene Stabelektroden und ist im oberflächennahen Gasraum des Verdünnungswassers 24 derart angeordnet, dass ihre Stäbe parallel zur Oberfläche verlaufen. Eine geerdete Gegenelektrode 51 ist als massive Platte ausgeführt und in über die ganze Fläche verteilten äquidistanten Abständen zur Hochspannungselektrode 50 angeordnet. Auch die Wand des Kanals 37 könnte alternativ als Gegenelektrode ausgeführt sein.

FIG 14 zeigt mit einem letzten Ausführungsbeispiel ein gepulstes Plasma oder Korona-Entladungssystem in einer wässrigen Lösung in einem Gefäß, Behälter, Bottich oder Rohr. Das Elektrodensystem ist analog zur FIG 3 als ein Koaxialdraht-Rohrelektrodensystem ausgebildet. Die Hochspannungselektrode 50 ist koaxial zu der Gegenelektrode 51, welche die Gefäß- bzw. Rohrwand bildet, angeordnet. Zur Unterstützung der Radikalerzeugung bzw. der Erzeugung der chemisch aktiven Substanzen werden über eine Gasleitung 80 mittels eines Gasverteilers 81 feinste Gasperlen in den Entladungsbereich eingeleitet. In den Gasblasen 82 und 83 bilden sich vorzugsweise die zu FIG 3 erläuterten Streamer aus. Aufgrund der Streamerentladungen entstehen Oxidanzien 57. Es werden also in dem Verdünnungswasser bestimmte Radikale erzeugt.

## Patentansprüche

1. Verfahren zur Verbesserung der Qualität der in einem Stoffaufbereitungsprozess erzeugten Stoffsuspension (39) für die spätere Herstellung von Flächengebilden aus Faserstoffen, **dadurch gekennzeichnet, dass** ein Verdünnungswasser (24) mit einem kalten Plasma oder einer Gasentladung behandelt wird, bevor das Verdünnungswasser (24) der Stoffsuspension (39) zugegeben wird, wobei das Verdünnungswasser (24) zum Bleichen der Faserstoffe verwendet und
- in einem kontinuierlichen Strom am Ort der Plasmabeaufschlagung vorbeigeführt und/oder
- in einem Rohr oder Kanal oder einer Leitung am Ort der Plasmabeaufschlagung vorbeigeführt und/oder
- in einem freien Strahl am Ort der Plasmabeaufschlagung vorbei oder hindurch geführt wird.

2. Verfahren nach Anspruch 1,
wobei zur Erzeugung des Plasmas bzw. der Gasentladung zwischen Elektroden (43,44) Hochspannungsimpulse (66,67) mit einer Impulsdauer (62) von weniger als 10 µs erzeugt werden.

3. Verfahren nach Anspruch 1 oder 2,
wobei das Verdünnungswasser (24) mit zumindest einer Elektrode (50) zur Erzeugung des Plasmas oder der Gasentladung in Kontakt gebracht wird.

4. Verfahren nach einem der Ansprüche 1 bis 3,
wobei das Plasma oder die Gasentladung im Verdünnungswasser (24) erzeugt wird.

5. Verfahren nach einem der Ansprüche 1 bis 4,
wobei im Plasma oder mittels der Gasentladung Radikale (59) erzeugt werden, die auf die Faserstoffe einwirken.

6. Verfahren nach Anspruch 5,
wobei als Radikale (59) Ozon (O₃), Wasserstoffperoxyd (H₂O₂), Hydroxyl-Radikale (OH), HO₂, O, OH⁻, HOO⁻ und/oder HO₂⁻ erzeugt werden.

7. Verfahren nach einem der Ansprüche 5 oder 6,
wobei eine Erzeugungsrate der Radikale (59) und/oder die Zusammensetzung der erzeugten Radikale (59) durch Beeinflussung einer Amplitude (U), einer Impulsdauer (62) und/oder einer Impulswiederholrate (63) der Hochspannungsimpulse (66,67) gesteuert wird.

8. Verfahren nach Anspruch 7,
wobei zur Steuerung und/oder Regelung der Erzeugungsrate und/oder der Art der erzeugten Radikale (59) eine Konzentration der erzeugten Radikale (59) gemessen wird.

9. Verfahren nach Anspruch 8,
wobei die Konzentration "online" gemessen wird.

10. Verfahren nach einem der Ansprüche 7 bis 9,
wobei zur Regelung und/oder Steuerung die Amplitude (U) der Hochspannungsimpulse (66,67) bei konstanter Wiederholrate (63) verändert wird.

11. Verfahren nach einem der Ansprüche 7 bis 10,
wobei zur Regelung und/oder Steuerung die Impulswiederholrate (63) der Hochspannungsimpulse (66,67) bei konstanter Amplitude (U) verändert wird.

12. Verfahren nach einem der Ansprüche 1 bis 11,
wobei das Verdünnungswasser (24) mit einem Gas angereichert wird.

13. Verfahren nach einem der Ansprüche 1 bis 12,
wobei das Verdünnungswasser (24) im Bereich des erzeugten Plasmas oder der Gasentladung mit Gas angereichert wird.

14. Verfahren nach einem der Ansprüche 2 bis 13,
wobei die Impulswiederholrate (63) zwischen 10Hz und 5kHz, insbesondere aus dem Bereich von 10Hz bis 10kHz, verwendet wird.

15. Verfahren nach einem der Ansprüche 2 bis 14,
**dadurch gekennzeichnet, dass** die Hochspannungsimpulse (66,67) mit einer Impulsdauer (62) von weniger als 3 µs, vorzugsweise von weniger als 1 µs, vorzugsweise von weniger als 500 ns, angewendet werden.

## Claims

1. Method for improving the quality of the pulp slurry (39) that is produced in a stock preparation process for subsequent production of planar structures from fibrous materials, **characterised in that** a dilution water (24) is treated with a cold plasma or a gas discharge before being added to the pulp slurry (39), wherein the dilution water (24) is used to bleach the fibrous materials and
- passes the location of the plasma application in a continuous flow and/or
- passes the location of the plasma application in a tube or channel or pipe and/or
- is guided past or through the location of the plasma application in a continuous jet.

2. Method according to claim 1,
wherein to produce the plasma or gas discharge between electrodes (43, 44) high-voltage pulses (66, 67) are produced with a pulse duration (62) of less than 10 µs.

3. Method according to claim 1 or 2,
wherein the dilution water (24) is brought into contact with at least one electrode (50) to produce the plasma or gas discharge.

4. Method according to one of claims 1 to 3,
wherein the plasma or gas discharge is produced in the dilution water (24).

5. Method according to one of claims 1 to 4,
wherein radicals (59) which act on the fibrous materials are produced in the plasma or by means of the gas discharge.

6. Method according to claim 5,
wherein ozone (O₃), hydrogen peroxide (H₂O₂), hydroxyl radicals (OH), HO₂, O, OH⁻, HOO⁻ and/or HO₂⁻ are produced as radicals (59).

7. Method according to one of claims 5 or 6,
wherein a production rate of the radicals (59) and/or the composition of the radicals (59) produced is controlled by influencing an amplitude (U), a pulse duration (62) and/or a pulse repetition rate (63) of the high-voltage pulses (66, 67).

8. Method according to claim 7,
wherein to control and/or regulate the production rate and/or the type of radicals (59) produced a concentration of the radicals (59) produced is measured.

9. Method according to claim 8,
wherein the concentration is measured online.

10. Method according to one of claims 7 to 9,
wherein for regulation and/or control the amplitude (U) of the high-voltage pulses (66, 67) is varied at a constant repetition rate (63).

11. Method according to one of claims 7 to 10,
wherein for regulation and/or control the pulse repetition rate (63) of the high-voltage pulses (66, 67) is varied at a constant amplitude (U).

12. Method according to one of claims 1 to 11,
wherein the dilution water (24) is enriched with a gas.

13. Method according to one of claims 1 to 12,
wherein the dilution water (24) is enriched with gas in the region of the plasma produced or of the gas discharge.

14. Method according to one of claims 2 to 13,
wherein the pulse repetition rate (63) used is between 10 Hz and 5 kHz, in particular in the range between 10 Hz and 10 kHz.

15. Method according to one of claims 2 to 14,
**characterised in that** the high-voltage pulses (66, 67) are applied with a pulse duration (62) of less than 3 µs, preferably of less than 1 µs, preferably of less than 500 ns.

## Revendications

1. Procédé d'amélioration de la qualité d'une suspension (39) de matière produite dans un procédé de préparation de matière pour la production ultérieure d'étoffes en matières fibreuses, **caractérisé en ce que** l'on traite une eau (24) de dilution par un plasma froid ou par une décharge dans un gaz avant d'ajouter l'eau (24) de dilution à la suspension (39) de matière, l'eau (24) de dilution étant utilisée pour le blanchiment des matières fibreuses, et
- passant en un courant continu devant l'emplacement du traitement par un plasma et/ou
- passant dans un tuyau ou un canal ou un conduit à l'emplacement du traitement par un plasma et/ou
- passant devant un faisceau libre à l'emplacement du traitement par un plasma ou le traversant.

2. Procédé suivant la revendication 1,
dans lequel, pour la production du plasma ou de la décharge dans un gaz, on produit des impulsions (66, 67) de haute tension entre des électrodes (43, 44) ayant une durée (62) d'impulsion de moins de 10 µs.

3. Procédé suivant l'une des revendications 1 ou 2,
dans lequel on met l'eau (24) de dilution en contact avec au moins une électrode (50) pour la production du plasma ou la décharge dans un gaz.

4. Procédé suivant l'une des revendications 1 à 3,
dans lequel on produit le plasma ou la décharge dans un gaz dans l'eau (24) de dilution.

5. Procédé suivant l'une des revendications 1 à 4,
dans lequel on produit, dans le plasma ou au moyen de la décharge dans un gaz, des radicaux (59) qui agissent sur les matières fibreuses.

6. Procédé suivant la revendication 5,
dans lequel on produit comme radicaux (59) de l'ozone (O₃), du peroxyde d'hydrogène (H₂O₂), des radicaux hydroxyles (OH), HO₂, O, OH⁻, HOO⁻ et/ou HO₂⁻.

7. Procédé suivant l'une des revendications 5 ou 6,
dans lequel on règle une vitesse de production de radicaux (59) et/ou la composition des radicaux (59) produits en influant sur une amplitude (U), une durée (62) des impulsions et/ou une fréquence (63) de répétition des impulsions (66, 67) de haute tension.

8. Procédé suivant la revendication 7,
dans lequel, pour se rendre maître et/ou pour la régulation de la vitesse de production et/ou de la nature des radicaux (59) produits, on mesure une concentration des radicaux (59) produits.

9. Procédé suivant la revendication 8,
dans lequel on mesure la concentration « en ligne ».

10. Procédé suivant l'une des revendications 7 à 9,
dans lequel, pour la régulation et/ou pour se rendre maître de la vitesse de production, on modifie l'amplitude (U) des impulsions (66, 67) de haute tension à une fréquence (63) de répétition constante.

11. Procédé suivant l'une des revendications 7 à 10,
dans lequel, pour la régulation et/ou pour se rendre maître de la vitesse de production, on modifie la fréquence (63) de répétition des impulsions (66, 67) de haute tension à amplitude (U) constante.

12. Procédé suivant l'une des revendications 1 à 11,
dans lequel on enrichit l'eau (24) de dilution en un gaz.

13. Procédé suivant l'une des revendications 1 à 12,
dans lequel on enrichit l'eau (24) de dilution en gaz dans la zone du plasma produit ou de la décharge dans un gaz.

14. Procédé suivant l'une des revendications 2 à 13,
dans lequel on utilise la fréquence (63) de répétition des impulsions entre 10Hz et 5kHz, notamment dans la plage allant de 10Hz à 10kHz.

15. Procédé suivant l'une des revendications 2 à 14,
**caractérisé en ce que** l'on applique des impulsions (66, 67) de haute tension ayant une durée (62) de moins de 3 µs, de préférence de moins de 1 µs, de préférence de moins de 500 ns.
